# EUROPEAN PATENT APPLICATION

(11) **EP 1 728 842 A1**
(43) Date of publication of application: **06.12.2006**
(21) Application number: 05719351.8
(22) Date of filing: 21.02.2005
(51) Int. Cl.: C09J 7/02

(54) **PRESSURE-SENSITIVE ADHESIVE SHEET**

(30) Priority: 27.02.2004 JP 2004053936
(71) Applicant: Lintec Corporation, Tokyo 173-0001 (JP)
(72) Inventor: KATOH, Kiichiro, c/o LINTEC CORPORATION, Warabi-shi, Saitama 3350005 (JP); TSUDA, Kazuhiro, c/o LINTEC CORPORATION, Warabi-shi, Saitama 3350005 (JP); KANAZAWA, Osamu, c/o LINTEC CORPORATION, Warabi-shi, Saitama 3350005 (JP)
(74) Representative: Nicholls, Michael John
(86) International application number: PCT/JP2005/002732
(87) International publication number: WO 2005/083024

(57) **Abstract**

A pressure-sensitive adhesive sheet 1 comprising a base material 11 and a pressure-sensitive adhesive layer 12 has formed therein a plurality of through holes 2 passing through from one surface to the other surface thereof. The through holes 2 have a diameter in a range of 0.1 to 300 µm, and a hole density in a range of 30 to 50, 000 per 100 cm². Moreover, the pressure-sensitive adhesive layer 12 has a storage modulus at Tₘₐₓ (the maximum temperature to which the pressure-sensitive adhesive sheet 1 may be exposed after having been stuck onto an adherend) of not less than 4.5×10³ Pa, and a loss tangent at Tₘₐₓ of not more than 0.78. According to the pressure-sensitive adhesive sheet 1, air entrapment and blistering can be prevented or eliminated while securing adequate adhesive strength and with no marring of the appearance, and furthermore air escaping ability is excellent even after being exposed to high temperature after having been stuck onto the adherend.

## Description

### TECHNICAL FIELD

The present invention relates to a pressure-sensitive adhesive sheet according to which air entrapment and blistering can be prevented or eliminated.

### BACKGROUND ART

When sticking a pressure-sensitive adhesive sheet onto an adherend by hand, entrapment of air between the adherend and the pressure-sensitive adhesive surface may occur, marring the appearance of the pressure-sensitive adhesive sheet. Such air entrapment is particularly prone to occur in the case that the pressure-sensitive adhesive sheet has a large area.

To eliminate problems with appearance of a pressure-sensitive adhesive sheet due to air entrapment, another pressure-sensitive adhesive sheet may be stuck on in place of the original pressure-sensitive adhesive sheet, or the original pressure-sensitive adhesive sheet may be peeled off and then reattached, or a hole may be made with a needle in a blistered portion of the pressure-sensitive adhesive sheet so as to allow the air to escape. However, in the case of sticking on in place of pressure-sensitive adhesive sheet, effort is required, and furthermore the cost is increased; moreover, in the case of reattaching the original pressure-sensitive adhesive sheet, problems often arise such as the pressure-sensitive adhesive sheet tearing, or wrinkles forming on the surface, or the adhesiveness dropping. On the other hand, the method of making a hole with a needle mars the appearance of the pressure-sensitive adhesive sheet.

To prevent air entrapment from occurring, there is a method in which water is put onto the adherend or the pressure-sensitive adhesive surface in advance before the two are stuck together; however, in the case of sticking on a pressure-sensitive adhesive sheet having large dimensions such as a scattering glass preventing film stuck onto a window, a decorative film or a marking film, much time and effort is required. Moreover, there is a method in which air entrapment is prevented from occurring by sticking on the pressure-sensitive adhesive sheet using a device rather than by hand; however, depending on the use of the pressure-sensitive adhesive sheet or the site or shape of the adherend, it may not be possible to use such a device for sticking on the pressure-sensitive adhesive sheet.

Meanwhile, a resin material such as an acrylic resin, an ABS resin, a polystyrene resin or a polycarbonate resin may emit a gas upon heating or even with no heating; in the case of sticking a pressure-sensitive adhesive sheet onto an adherend made of such a resin material, blistering may occur on the pressure-sensitive adhesive sheet due to the gas emitted from the adherend.

To solve such problems, in Utility Model Registration No. 2503717 and Utility Model Registration No. 2587198, there is proposed a pressure-sensitive adhesive sheet in which a large number of independent small protruding portions are disposed scattered over a pressure-sensitive adhesive surface of a pressure-sensitive adhesive layer. In this pressure-sensitive adhesive sheet, a state is maintained in which the tips of the small protruding portions of the pressure-sensitive adhesive layer are in close contact with the adherend and hence a basic flat surface of the pressure-sensitive adhesive layer is separated away from the adherend, whereby gaps that communicate with the outside arise between the basic flat surface of the pressure-sensitive adhesive layer and the adherend, and hence air or gas can escape to the outside from these gaps, thus preventing air entrapment or blistering of the pressure-sensitive adhesive sheet.

### DISCLOSURE OF THE INVENTION

### PROBLEM TO BE SOLVED BY THE INVENTION

However, with the pressure-sensitive adhesive sheet disclosed in Utility Model Registration No. 2503717 and Utility Model Registration No. 2587198, there have been problems that, because only the tips of the small protruding portions of the pressure-sensitive adhesive layer are stuck to the adherend, the adhesive strength is weak, and moreover water, chemicals and so on readily infiltrate in between the pressure-sensitive adhesive layer and the adherend, whereby the adhesive strength further drops. Even if such a pressure-sensitive adhesive sheet is strongly pressed against the adherend, the adhesive strength is still not adequate due to the influence of the small protruding portions of the pressure-sensitive adhesive layer. Moreover, in this case, the gaps communicating with the outside are filled in, and hence blistering that occurs when gas is emitted from the adherend cannot be prevented.

Moreover, with the above pressure-sensitive adhesive sheet, if the pressure-sensitive adhesive sheet is exposed to high temperature after having been stuck onto the adherend, then the pressure-sensitive adhesive layer flows so that the small protruding portions are lost, and hence after exposure to high temperature, in the case that residual air entrapment or inadequate following of recesses in the adherend is discovered, or the case that blistering arises, air or gas cannot escape to the outside, and hence it has not been possible to eliminate or prevent air entrapment and blistering.

The present invention has been devised in view of the above state of affairs; it is an object of the present invention to provide a pressure-sensitive adhesive sheet according to which air entrapment and blistering can be prevented or eliminated while securing adequate adhesive strength and with no marring of the appearance of the pressure-sensitive adhesive sheet, and furthermore air escaping ability is excellent even after being exposed to high temperature after having been stuck onto an adherend.

### MEANS FOR SOLVING THE PROBLEM

To attain the above object, firstly, the present invention provides a pressure-sensitive adhesive sheet comprising a base material and a pressure-sensitive adhesive layer, having formed therein a plurality of through holes passing through from one surface to the other surface thereof, and being exposed at maximum temperature Tₘₐₓ (wherein 20 °C ≤ Tₘₐₓ ≤ 130 °C) after having been stuck onto an adherend, the pressure-sensitive adhesive sheet characterized in that the through holes have a diameter in the base material and the pressure-sensitive adhesive layer in a range of 0.1 to 300 µm, and a hole density in a range of 30 to 50,000 per 100 cm², and the pressure-sensitive adhesive layer has a storage modulus at Tₘₐₓ of not less than 4.5×10³ Pa, and a loss tangent at Tₘₐₓ of not more than 0.78 (invention 1).

Moreover, secondly, the present invention provides a pressure-sensitive adhesive sheet comprising a base material and a pressure-sensitive adhesive layer, and having formed therein a plurality of through holes passing through from one surface to the other surface thereof, the pressure-sensitive adhesive sheet characterized in that the through holes have a diameter in the base material and the pressure-sensitive adhesive layer in a range of 0.1 to 300 µm, and a hole density in a range of 30 to 50,000 per 100 cm², and the pressure-sensitive adhesive layer has a storage modulus at 120 °C of not less than 4.5×10³ Pa, and a loss tangent at 120 °C of not more than 0.78 (invention 2).

Note that in the present specification, "sheet" is deemed to include the idea of a film, and "film" is deemed to include the idea of a sheet.

According to the pressure-sensitive adhesive sheet of the above inventions (inventions 1 and 2), air between an adherend and the pressure-sensitive adhesive surface escapes from the through holes to the outside of the pressure-sensitive adhesive sheet front surface, and hence air tends not to be caught up when sticking the pressure-sensitive adhesive sheet to the adherend, i.e. air entrapment can be prevented from occurring. Even if air is caught up so that air entrapment occurs, by re-pressing the air-entrapped portion or an air-entrapped portion surrounding portion including the air-entrapped portion, the air can be made to escape from the through holes to the outside of the pressure-sensitive adhesive sheet front surface, thus eliminating the air entrapment. Moreover, even if gas is emitted from the adherend after the pressure-sensitive adhesive sheet has been stuck onto the adherend, the gas will escape from the through holes to the outside of the pressure-sensitive adhesive sheet front surface, whereby blistering can be prevented from occurring.

Moreover, because the diameter of the through holes is not more than 300 µm, the through holes are not conspicuous at the pressure-sensitive adhesive sheet front surface, and hence the appearance of the pressure-sensitive adhesive sheet is not marred. Moreover, because the hole density of the through holes is not more than 50,000 per 100 cm², the mechanical strength of the pressure-sensitive adhesive sheet is maintained.

Here, the pressure-sensitive adhesive layer is generallymade from a relatively soft material, and hence the through holes formed in the pressure-sensitive adhesive layer are prone to being lost at least partially in their depth direction due to flow of the pressure-sensitive adhesive upon the pressure-sensitive adhesive sheet being exposed to high temperature after having been stuck onto an adherend; if the through holes in the pressure-sensitive adhesive layer collapse in this way, then it is no longer possible to subsequently eliminate air entrapment, or prevent or eliminate blistering. However, according to the pressure-sensitive adhesive sheet of the present invention described above, due to the storage modulus and the loss tangent of the pressure-sensitive adhesive layer being stipulated as described above, even if the pressure-sensitive adhesive sheet is exposed to high temperature (e.g. 120 °C) after having been stuck onto the adherend, the through holes in the pressure-sensitive adhesive layer will not collapse, and a prescribed diameter can be maintained.

In the case of the above inventions (inventions 1 and 2), the through holes are preferably formed by laser processing (invention 3). Through laser processing, minute through holes with good air escaping ability can easily be formed at a desired hole density. Note, however, that the method of forming the through holes is not limited to this, but rather the through holes may also be formed, for example, using a water jet, a micro-drill, precision pressing, a hot needle, fusing perforation, or the like.

### ADVANTAGEOUS EFFECT OF THE INVENTION

According to the pressure-sensitive adhesive sheet of the present invention, air entrapment and blistering can be prevented or eliminated while securing adequate adhesive strength and with no marring of the appearance. Moreover, according to the pressure-sensitive adhesive sheet of the present invention, air escaping ability is excellent even upon being exposed to high temperature after having been stuck onto an adherend, and hence in the case that residual air entrapment or inadequate following of recesses in the adherend is discovered or blistering arises after exposure to high temperature, this air entrapment or blistering can be eliminated or prevented.

### BRIEF DESCRIPTION OF THE DRAWINGS

FIG. 1 is a sectional view of a pressure-sensitive adhesive sheet according to an embodiment of the present invention; and
FIG. 2 consists of sectional views showing an example of a method of manufacturing the pressure-sensitive adhesive sheet according to the embodiment of the present invention.

### EXPLANATION OF REFERENCE NUMERALS

1: Pressure-sensitive adhesive sheet
   11: Base material
   12: Pressure-sensitive adhesive layer
   13: Release liner
1A: Pressure-sensitive adhesive sheet front surface
1B: Pressure-sensitive adhesive surface
2: Through hole

### BEST MODE FOR CARRYING OUT THE INVENTION

Following is a description of an embodiment of the present invention.

### [Pressure-sensitive adhesive sheet]

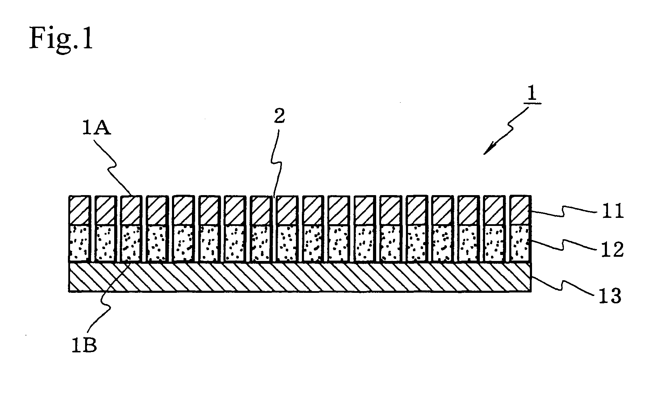

FIG. 1 is a sectional view of a pressure-sensitive adhesive sheet according to an embodiment of the present invention.

As shown in FIG. 1, the pressure-sensitive adhesive sheet 1 according to the present embodiment comprises a base material 11, a pressure-sensitive adhesive layer 12, and a release liner 13 laminated on one another. Note, however, that the release liner 13 is peeled off when using the pressure-sensitive adhesive sheet 1.

A plurality of through holes 2 that penetrate through the base material 11 and the pressure-sensitive adhesive layer 12 and thus pass from a pressure-sensitive adhesive sheet front surface 1A to a pressure-sensitive adhesive surface 1B are formed in the pressure-sensitive adhesive sheet 1. When the pressure-sensitive adhesive sheet 1 is used, air between an adherend and the pressure-sensitive adhesive surface 1B of the pressure-sensitive adhesive layer 12 and gas emitted from the adherend escape from these through holes 2 to the outside of the pressure-sensitive adhesive sheet front surface 1A, and hence as described later, air entrapment and blistering can be prevented or eliminated.

There are no particular limitations on the cross sectional shape of the through holes 2, but the diameter of the through holes 2 in the base material 11 and the pressure-sensitive adhesive layer 12 is in a range of 0.1 to 300 µm, preferably 0.5 to 150 µm. If the diameter of the through holes 2 is less than 0.1 µm, then it will be difficult for air or gas to escape, whereas if the diameter of the through holes 2 is greater than 300 µm, then the through holes 2 will become conspicuous, and hence the appearance of the pressure-sensitive adhesive sheet 1 will be marred.

Here, if the diameter of the through holes 2 at the pressure-sensitive adhesive sheet front surface 1A is not more than 40 µm, then the holes themselves of the through holes 2 (i.e. the spaces inside the through holes 2) will be able to not be seen with the naked eye, and hence in the case in particular that with regard to the appearance of the pressure-sensitive adhesive sheet 1 it is required that the holes themselves of the through holes 2 cannot be seen, it is preferable to set the upper limit of the diameter of the through holes 2 at the pressure-sensitive adhesive sheet front surface 1A to 40 µm. In this case, in the case in particular that the base material 11 is transparent, not only the diameter at the pressure-sensitive adhesive sheet front surface 1A but also the diameter in the inside of the base material 11 and the pressure-sensitive adhesive layer 12 may affect the visibility of the holes, and hence it is particularly preferable to set the upper limit of the diameter of the through holes 2 in the inside of the base material 11 and the pressure-sensitive adhesive layer 12 to 60 µm.

The diameter of the through holes 2 may be constant in the thickness direction of the pressure-sensitive adhesive sheet 1, or may change in the thickness direction of the pressure-sensitive adhesive sheet 1, but in the case that the diameter of the through holes 2 changes in the thickness direction of the pressure-sensitive adhesive sheet 1, the diameter of the through holes 2 preferably decreases gradually from the pressure-sensitive adhesive surface 1B to the pressure-sensitive adhesive sheet front surface 1A. Through the diameter of the through holes 2 changing in this way, the through holes 2 become less conspicuous at the pressure-sensitive adhesive sheet front surface 1A, and hence a good appearance of the pressure-sensitive adhesive sheet 1 can be maintained. Note, however, that even in this case, the diameter of the through holes 2 in the base material 11 and the pressure-sensitive adhesive layer 12 must be within the above range (0.1 to 300 µm).

The hole density of the through holes 2 is in a range of 30 to 50,000 per 100 cm², preferably 100 to 10,000 per 100 cm². If the hole density of the through holes 2 is less than 30 per 100 cm², then it will be difficult for air or gas to escape, whereas if the hole density of the through holes 2 is greater than 50,000 per 100 cm², then the mechanical strength of the pressure-sensitive adhesive sheet 1 will drop.

The through holes 2 are preferably formed by laser processing, described below. Through laser processing, minute through holes with good air escaping ability can easily be formed at a desired hole density. Note, however, that the method of forming the through holes 2 is not limited to this, but rather the through holes 2 may also be formed, for example, using a water jet, a micro-drill, precision pressing, a hot needle, fusing perforation, or the like.

There are no particular limitations on the material of the base material 11 so long as this is a material in which the above described through holes 2 can be formed; examples include a resin film, a metal film, a resin film having a metal deposited thereon by vapor deposition, paper, or a laminate of the above. These materials may contain any of various additives such as inorganic fillers, organic fillers, and ultraviolet absorbers. In the case that the base material 11 comprises a resin film, the base material 11 may be opaque or transparent, but in general the through holes 2 are less conspicuous if the base material 11 is opaque.

The surface of the material may have a decorative layer formed thereon by a method such as printing, painting, transfer from a transfer sheet, vapor deposition, or sputtering, or may have formed thereon an undercoat layer such as an adhesion facilitating coat for forming such a decorative layer, or a gloss adjusting coat, or may have formed thereon a topcoat layer such as a hard coat or a antifouling coat. Moreover, such a decorative layer, undercoat layer or topcoat layer may be formed over the whole of the material, or may be formed on only part of the material.

As a resin film, there can be used, for example, a film or a foamed film made of a resin such as a polyolefin such as polyethylene or polypropylene, a polyester such as polyethylene terephthalate or polybutylene terephthalate, polyvinyl chloride, polystyrene, a polyurethane, a polycarbonate, a polyamide, a polyimide, polymethyl methacrylate, polybutene, polybutadiene, polymethylpentene, an ethylene-vinyl acetate copolymer, an ethylene-(meth)acrylic acid copolymer, an ethylene-(meth)acrylate ester copolymer, anABS resin, or an ionomer resin, or a thermoplastic elastomer containing a component such as a polyolefin, a polyurethane, polystyrene, polyvinyl chloride or a polyester, or a laminated film of the above. As the resin film, a commercially available one may used, or one formed by a casting method or the like using a process material may be used. Moreover, as paper, there can be used, for example, woodfree paper, glassine paper, coated paper, laminated paper, or the like.

There are no particular limitations on the above process material so long as this is a material in which the through holes 2 can be formed by the desired hole formation method; for example, any of various types of paper, or a resin film of polyethylene terephthalate, polypropylene, polyethylene or the like that has been subjected to release treatment with a release agent of a silicone type, a polyester type, an acrylic type, an alkyd type, a urethane type or the like or a synthetic resin can be used. The thickness of the process material is generally approximately 10 to 200 µm, preferably approximately 25 to 150 µm.

The thickness of the base material 11 is generally approximately 1 to 500 µm, preferably 3 to 300 µm, but may be changed as appropriate in accordance with the use of the pressure-sensitive adhesive sheet 1.

In the case that the pressure-sensitive adhesive sheet 1 is exposed at a maximum temperature Tₘₐₓ (wherein 20 °C ≤ Tₘₐₓ ≤ 130 °C) after having been stuck onto an adherend, the pressure-sensitive adhesive layer 12 must have a storage modulus at Tₘₐₓ of not less than 4.5×10³ Pa, preferably 5.0×10³ to 5.0×10⁶ Pa, and a loss tangent at Tₘₐₓ of not more than 0.78, preferably 0.01 to 0.75. Through the pressure-sensitive adhesive layer 12 satisfying these conditions, even if the pressure-sensitive adhesive sheet 1 which is stuck onto the adherend is exposed to the temperature Tₘₐₓ, the through holes 2 do not collapse due to flow of the pressure-sensitive adhesive and the above diameter can be maintained. Specifically, even if the pressure-sensitive adhesive sheet 1 is placed under high temperature after having been stuck onto the adherend, the shape of the through holes 2 will be stable, and hence air entrapment and blistering can be eliminated or prevented.

Note that the temperature to which the pressure-sensitive adhesive sheet 1 may be exposed after having been stuck onto the adherend generally has an upper limit of approximately 120 °C, and hence the values of the storage modulus and the loss tangent described above may instead be stipulated fixedly at 120 °C.

There are no particular limitations on the type of the pressure-sensitive adhesive constituting the pressure-sensitive adhesive layer 12 so long as the pressure-sensitive adhesive layer 12 has a storage modulus and a loss tangent as described above; the pressure-sensitive adhesive may be any of an acrylic type, a polyester type, a polyurethane type, a rubber type, a silicone type, or the like. Moreover, the pressure-sensitive adhesive may be any of an emulsion type, a solvent type, or a solvent-less type, and may be either a crosslinked type or a non-crosslinked type.

The thickness of the pressure-sensitive adhesive layer 12 is generally 1 to 300 µm, preferably 5 to 100 µm, but may be changed as appropriate in accordance with the use of the pressure-sensitive adhesive sheet 1.

There are no particular limitations on the material of the release liner 13 so long as this is a material in which the through holes 2. can be formed as described above; for example, a film or foamed film made of a resin such as polyethylene terephthalate, polypropylene or polyethylene, or paper such as glassine paper, coated paper or laminated paper, that has been subjected to release treatment with a release agent such as a silicone type one, a fluorine type one or a long chain alkyl group-containing carbamate can be used.

The thickness of the release liner 13 is generally approximately 10 to 250 µm, preferably approximately 20 to 200 µm. Moreover, the thickness of the release agent in the release liner 13 is generally 0.05 to 5 µm, preferably 0.1 to 3 µm.

Note that the through holes 2 in the pressure-sensitive adhesive sheet 1 according to the present embodiment pass through only the base material 11 and the pressure-sensitive adhesive layer 12, but the through holes 2 may also pass through the release liner 13.

Moreover, the pressure-sensitive adhesive sheet 1 according to the present embodiment has the release liner 13, but there is no limitation to this in the present invention; the pressure-sensitive adhesive sheet 1 may have no release liner 13. Furthermore, there are no particular limitations on the size, shape and so on of the pressure-sensitive adhesive sheet 1 according to the present embodiment. For example, the pressure-sensitive adhesive sheet 1 may be a tape comprising only the base material 11 and the pressure-sensitive adhesive layer 12 (a pressure-sensitive adhesive tape), and may also be wound up into a roll.

### [Manufacture of pressure-sensitive adhesive sheet]

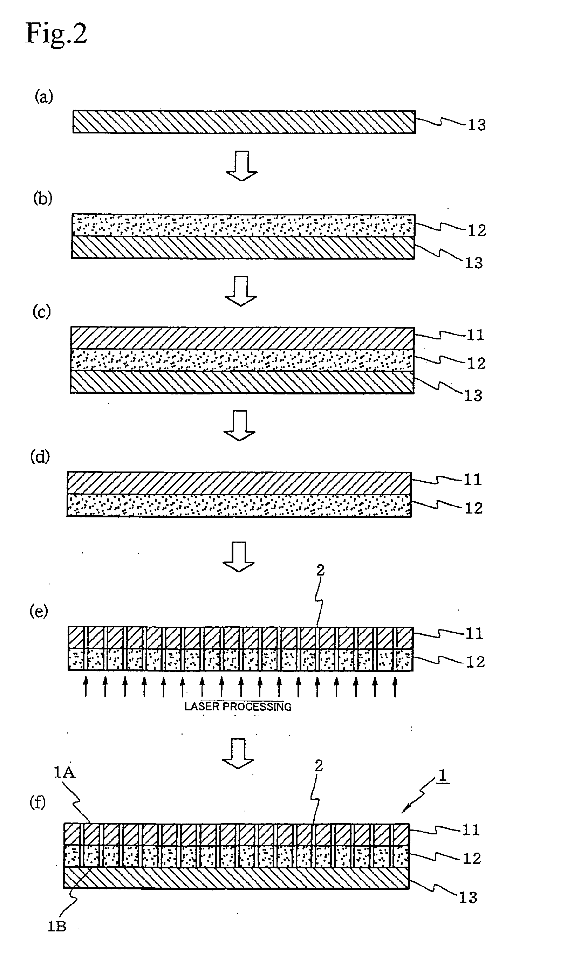

An example of a method of manufacturing the pressure-sensitive adhesive sheet 1 according to the above embodiment will now be described with reference to FIGS. 2(a) to (f).

In the present manufacturing method, firstly, as shown in FIGS. 2(a) and (b), the pressure-sensitive adhesive layer 12 is formed on the release treated surface of the release liner 13. The pressure-sensitive adhesive layer 12 may be formed by preparing a coating agent containing the pressure-sensitive adhesive that will constitute the pressure-sensitive adhesive layer 12, and also a solvent if desired, applying the coating agent onto the release treated surface of the release liner 13 using a coater such as a roll coater, a knife coater, a roll knife coater, an air knife coater, a die coater, a bar coater, a gravure coater, or a curtain coater, and drying.

Next, as shown in FIG. 2 (c), the base material 11 is superposed onto the surface of the pressure-sensitive adhesive layer 12, thus obtaining a laminate comprising the base material 11, the pressure-sensitive adhesive layer 12, and the release liner 13. Then, as shown in FIG. 2(d), the release liner 13 is peeled off from the pressure-sensitive adhesive layer 12, then, as shown in FIG. 2 (e), the through holes 2 are formed in the laminate comprising the base material 11 and the pressure-sensitive adhesive layer 12, and then, as shown in FIG. 2 (f), the release liner 13 is superposed again onto the pressure-sensitive adhesive layer 12.

In the present manufacturing method, the formation of the through holes 2 is carried out by laser processing, the pressure-sensitive adhesive layer 12 being irradiated directly with a laser from the pressure-sensitive adhesive layer 12 side. By carrying out the laser processing from the pressure-sensitive adhesive layer 12 side in this way, even if the through holes 2 become tapered, the diameter of the through holes 2 can be made to be smaller on the base material 11 side than on the release liner 13 side. The through holes 2 will thus tend to be inconspicuous at the front surface of the pressure-sensitive adhesive sheet 1, and hence a good appearance of the pressure-sensitive adhesive sheet 1 can be maintained.

Moreover, due to temporarily peeling off the release liner 13 and irradiating the pressure-sensitive adhesive layer 12 with the laser directly, there is no widening of the opening of each of the through holes 2 in the pressure-sensitive adhesive layer 12 due to thermally melted matter, i.e. so-called dross, from the release liner 13, and hence the degree of precision of the diameter and the hole density will be high, and thus through holes 2 can be formed that will not be prone to being entered by water or the like which might have an adverse effect on the pressure-sensitive adhesive sheet 1. Furthermore, when irradiating the pressure-sensitive adhesive layer 12 with the laser, by making the release liner 13 be not present therebetween, the laser irradiation time can be shortened, or the laser output energy can be reduced. If the laser output energy is reduced, then thermal effects on the pressure-sensitive adhesive layer 12 and the base material 11 are reduced, and it is possible to form through holes 2 of uniform shape with little dross or the like.

There are no particular limitations on the type of the laser used in the laser processing; for example, a carbon dioxide (CO₂) laser, a TEA-CO₂ laser, a YAG laser, a UV-YAG laser, an excimer laser, a semiconductor laser, a YVO₄ laser, a YLF laser, or the like can be used.

In the present manufacturing method, before carrying out the laser processing, a peelable protective sheet may be laminated onto the surface of the base material 11 at a desired stage. As the protective sheet, for example a publicly known pressure-sensitive adhesive protective sheet comprising a base material and a removable pressure-sensitive adhesive layer or the like can be used.

When forming the through holes 2 by the laser processing, dross may become attached around the openings of the through holes 2, but due to laminating the protective sheet onto the surface of the base material 11, the dross becomes attached to the protective sheet rather than the base material 11, and hence the appearance of the pressure-sensitive adhesive sheet 1 can be better maintained.

Note that in the above manufacturing method, the pressure-sensitive adhesive layer 12 was formed on the release liner 13, and then the base material 11 was superposed onto the formed pressure-sensitive adhesive layer 12, but there is no limitation to this in the present invention; rather, the pressure-sensitive adhesive layer 12 may instead be formed on the base material 11 directly. Moreover, the laser processing may be carried out in a state with the release liner 13 laminated on, and furthermore the irradiation with the laser may be carried out from the base material 11 or the above protective sheet side.

### [Use of pressure-sensitive adhesive sheet]

When sticking the pressure-sensitive adhesive sheet 1 onto an adherend, the release liner 13 is peeled off from the pressure-sensitive adhesive layer 12, the pressure-sensitive adhesive surface 1B of the exposedpressure-sensitive adhesive layer 12 is made to be in close contact with the adherend, and then the pressure-sensitive adhesive sheet 1 is pressed onto the adherend. At this time, air between the adherend and the pressure-sensitive adhesive surface 1B of the pressure-sensitive adhesive layer 12 escapes from the through holes 2 formed in the pressure-sensitive adhesive sheet 1 to the outside of the pressure-sensitive adhesive sheet front surface 1A, and hence air tends not to be caught up between the adherend and the pressure-sensitive adhesive surface 1B, i.e. air entrapment is prevented from occurring. Even if air is caught up so that air entrapment occurs, by re-pressing the air-entrapped portion or an air-entrapped portion surrounding portion including the air-entrapped portion, the air can be made to escape from the through holes 2 to the outside of the pressure-sensitive adhesive sheet front surface 1A, thus eliminating the air entrapment. Such elimination of air entrapment is possible even after a long time has elapsed after the sticking on of the pressure-sensitive adhesive sheet 1.

Moreover, even if gas is emitted from the adherend after the pressure-sensitive adhesive sheet 1 has been stuck onto the adherend, this gas will escape from the through holes 2 formed in the pressure-sensitive adhesive sheet 1 to the outside of the pressure-sensitive adhesive sheet front surface 1A, whereby the pressure-sensitive adhesive sheet 1 is prevented from blistering.

According to the pressure-sensitive adhesive sheet 1, air entrapment and blistering can be prevented or eliminated as described above, and yet because the through holes 2 formed in the pressure-sensitive adhesive sheet 1 are minute, there is no marring of the appearance of the pressure-sensitive adhesive sheet, and moreover despite the presence of the through holes 2, there is no risk of the adhesive strength dropping.

Furthermore, according to the pressure-sensitive adhesive sheet 1, air escaping ability is excellent even upon being exposed to high temperature after having been stuck onto an adherend, and hence in the case that residual air entrapment or inadequate following of recesses in the adherend is discovered or blistering arises after exposure to high temperature, this air entrapment or blistering can be eliminated or prevented.

### EXAMPLES

Following is a more detailed description of the present invention through examples and so on; however, the scope of the present invention is not limited by these examples and so on.

### [Example 1]

An acrylic solvent type pressure-sensitive adhesive (made by Lintec Corporation, MF) coating agent was applied using a knife coater such that the thickness after drying would be 30 µm onto the release treated surface of a release liner (made by Lintec Corporation, FPM-11, thickness: 175 µm) obtained by laminating both surfaces of woodfree paper with a polyethylene resin and applying a silicone type release agent onto one surface, and drying was carried out for 1 minute at 90 °C. A black opaque base material (thickness: 100 µm) made of a polyvinyl chloride resin was superposed onto the pressure-sensitive adhesive layer thus formed, whereby a laminate having a three-layer structure was obtained.

The release liner was peeled off from the laminate, and the laminate was irradiated with a CO₂ laser from the pressure-sensitive adhesive layer side, thus forming at a hole density of 2500 per 100 cm² through holes having a diameter at the base material surface of approximately 50 µm and a diameter at the pressure-sensitive adhesive surface of approximately 90 µm. The release liner was then superposed again onto the pressure-sensitive adhesive layer, whereby a pressure-sensitive adhesive sheet was obtained.

The storage modulus and the loss tangent of the pressure-sensitive adhesive layer in the pressure-sensitive adhesive sheet obtained were measured at 1 Hz at 23 °C, 80 °C, 100 °C and 120 °C using a viscoelasticity measuring apparatus (made by Rheometrics, apparatus name: DYNAMIC ANALYZER RDA II). The results are shown in Table 1.

### [Example 2]

Apressure-sensitive adhesive sheet was produced as in Example 1, except that the irradiation was carried out with a UV-YAG laser instead of the CO₂ laser, and the through holes were made to have a diameter at the base material surface of approximately 30 µm and a diameter at the pressure-sensitive adhesive surface of approximately 45 µm. The storage modulus and the loss tangent of the pressure-sensitive adhesive layer in the pressure-sensitive adhesive sheet obtained were then measured as in Example 1. The results are shown in Table 1.

### [Example 3]

Apressure-sensitive adhesive sheet was produced as in Example 1, except that an acrylic solvent type pressure-sensitive adhesive (made by Lintec Corporation, PK) was used as the pressure-sensitive adhesive, and the through holes were made to have a diameter at the base material surface of approximately 30 µm and a diameter at the pressure-sensitive adhesive surface of approximately 80 µm. The storage modulus and the loss tangent of the pressure-sensitive adhesive layer in the pressure-sensitive adhesive sheet obtained were then measured as in Example 1. The results are shown in Table 1.

### [Example 4]

Apressure-sensitive adhesive sheet was produced as in Example 1, except that an acrylic solvent type pressure-sensitive adhesive (made by Lintec Corporation, PL-2) was used as the pressure-sensitive adhesive, and the through holes were made to have a diameter at the base material surface of approximately 40 µm and a diameter at the pressure-sensitive adhesive surface of approximately 85 µm. The storage modulus and the loss tangent of the pressure-sensitive adhesive layer in the pressure-sensitive adhesive sheet obtained were then measured as in Example 1. The results are shown in Table 1.

### [Example 5]

Apressure-sensitive adhesive sheet was produced as in Example 1, except that a rubber solvent type pressure-sensitive adhesive (made by Lintec Corporation, PV-2) was used as the pressure-sensitive adhesive, and the through holes were made to have a diameter at the base material surface of approximately 30 µm and a diameter at the pressure-sensitive adhesive surface of approximately 80 µm. The storage modulus and the loss tangent of the pressure-sensitive adhesive layer in the pressure-sensitive adhesive sheet obtained were then measured as in Example 1. The results are shown in Table 1.

### [Example 6]

Apressure-sensitive adhesive sheet was produced as in Example 1, except that an acrylic emulsion type pressure-sensitive adhesive (made by Lintec Corporation, MHL) was used as the pressure-sensitive adhesive, a white opaque base material (made by Oji-Yuka Synthetic Paper Co. , Ltd. , Yupo SGS80, thickness: 80 µm) made of a polypropylene resin containing inorganic fillers was used as the base material, and the through holes were made to have a diameter at the base material surface of approximately 30 µm and a diameter at the pressure-sensitive adhesive surface of approximately 80 µm. The storage modulus and the loss tangent of the pressure-sensitive adhesive layer in the pressure-sensitive adhesive sheet obtained were then measured as in Example 1. The results are shown in Table 1.

### [Example 7]

Apressure-sensitive adhesive sheet was produced as in Example 6, except that an acrylic emulsion type pressure-sensitive adhesive (made by Lintec Corporation, KV-12) was used as the pressure-sensitive adhesive, and the through holes were made to have a diameter at the base material surface of approximately 40 µm and a diameter at the pressure-sensitive adhesive surface of approximately 90 µm. The storage modulus and the loss tangent of the pressure-sensitive adhesive layer in the pressure-sensitive adhesive sheet obtained were then measured as in Example 1. The results are shown in Table 1.

### [Example 8]

Apressure-sensitive adhesive sheet was produced as in Example 6, except that an acrylic emulsion type pressure-sensitive adhesive (made by Lintec Corporation, PC) was used as the pressure-sensitive adhesive, and the through holes were made to have a diameter at the base material surface of approximately 70 µm and a diameter at the pressure-sensitive adhesive surface of approximately 100 µm. The storage modulus and the loss tangent of the pressure-sensitive adhesive layer in the pressure-sensitive adhesive sheet obtained were then measured as in Example 1. The results are shown in Table 1.

### [Reference Example 1]

Apressure-sensitive adhesive sheet was produced as in Example 1, except that a rubber solvent type pressure-sensitive adhesive (made by Lintec Corporation, PT-3) was used as the pressure-sensitive adhesive, and the through holes were made to have a diameter at the base material surface of approximately 40 µm and a diameter at the pressure-sensitive adhesive surface of approximately 80 µm. The storage modulus and the loss tangent of the pressure-sensitive adhesive layer in the pressure-sensitive adhesive sheet obtained were then measured as in Example 1. The results are shown in Table 1.

### [Comparative Example 1]

Both surfaces of woodfree paper (basis weight 110 g/m²) were laminated with a low density polyethylene resin such that the laminated layer thickness was 25 µm, and a silicone type release agent was applied onto one surface. Next, a metal embossing roll was pressed onto the release treated surface at 80 °C so as to form recesses in the release treated surface, whereby a release liner was obtained.

A laminate having a three-layer structure (base material + pressure-sensitive adhesive layer + release liner) was produced as in Example 1, except that the release liner obtained as above and the pressure-sensitive adhesive used in Example 3 were used, whereby a pressure-sensitive adhesive sheet was obtained. Upon the release liner being peeled off from the pressure-sensitive adhesive sheet, the pressure-sensitive adhesive surface had formed thereon at 50 µm intervals lengthways and breadthways protruding portions having a substantially square shape in plan view with a side of length 150 µm and a height of 10 µm.

The storage modulus and the loss tangent of the pressure-sensitive adhesive layer in the pressure-sensitive adhesive sheet obtained were measured as in Example 1. The results are shown in Table 1.

### [Comparative Example 2]

Apressure-sensitive adhesive sheet was produced as in Example 3, except that the through holes were not formed. The storage modulus and the loss tangent of the pressure-sensitive adhesive layer in the pressure-sensitive adhesive sheet obtained were then measured as in Example 1. The results are shown in Table 1.

### [Test Examples]

For each of the pressure-sensitive adhesive sheets obtained in the Examples, the Reference Example and the Comparative Examples, an air entrapment removability test was carried out as follows. The results are shown in Table 1.

Air entrapment removability test: The pressure-sensitive adhesive sheet was cut to 50 mm × 50 mm and had the release liner peeled off therefrom, and was then stuck onto a melamine coated plate having therein a depression having the shape of part of a spherical surface with a diameter of 15 mm and a maximum depth of 1 mm (there was air entrapment between the depression and the pressure-sensitive adhesive sheet), and then after 30 minutes had elapsed after being stuck on, the pressure-sensitive adhesive sheet was left for 24 hours at a temperature of 23 °C, 80 °C, 100 °C or 120 °C. Next, the pressure-sensitive adhesive sheet was kept for 1 hour at room temperature (23 °C, humidity 50%), and then the pressure-sensitive adhesive sheet was pressed on using a squeegee, and it was checked whether or not the air entrapment could be eliminated. Pressure-sensitive adhesive sheets for which the result was that the pressure-sensitive adhesive sheet followed the depression in the melamine coated plate and the air entrapment was eliminated were marked as "O", and ones for which the pressure-sensitive adhesive sheet did not follow the depression in the melamine coated plate and the air entrapment was not eliminated (including ones for which the air entrapment remained only slightly) were marked as "×".

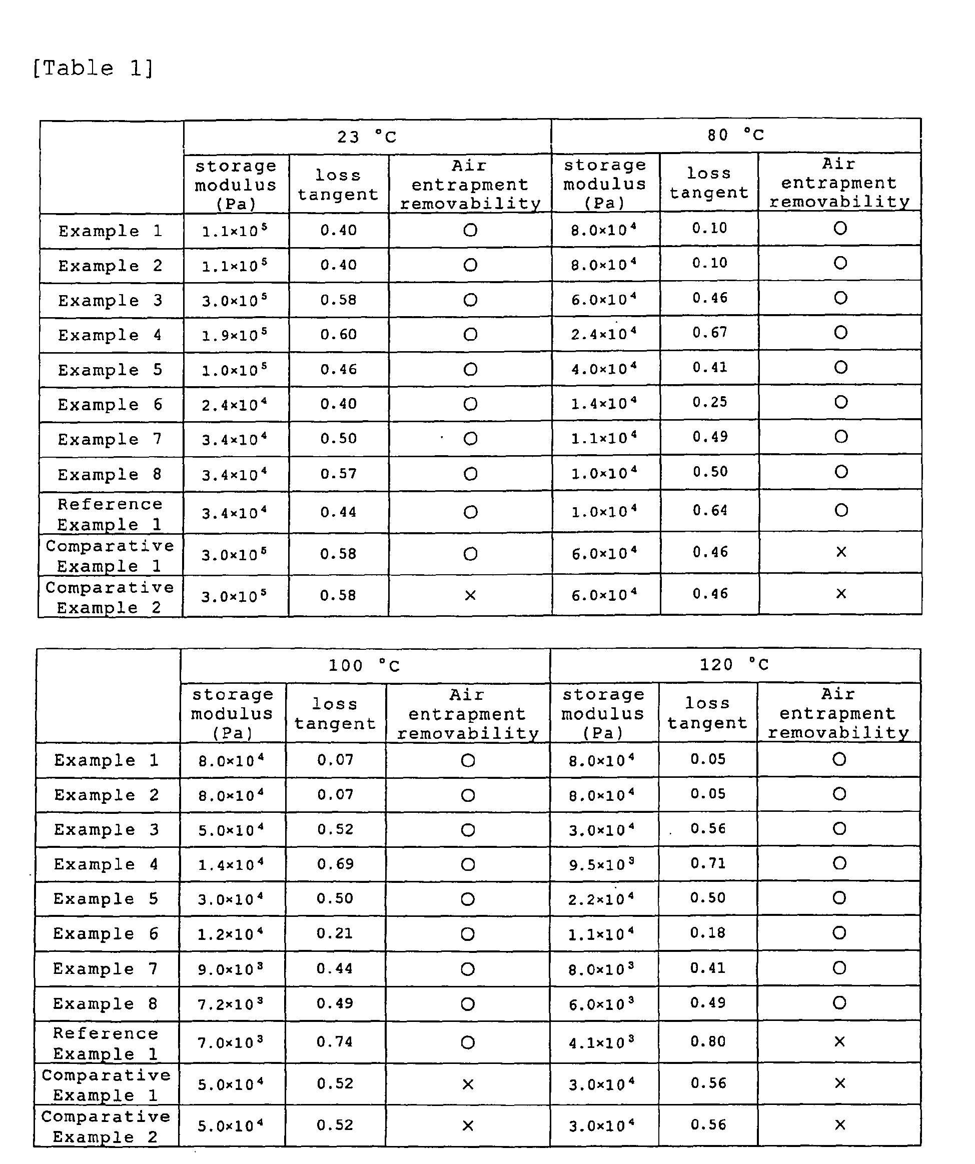

As can be seen from Table 1, in the case that the maximum exposure temperature (Tₘₐₓ) was set to 120 °C, for the pressure-sensitive adhesive sheets of Examples 1 to 8 for which the pressure-sensitive adhesive layer had a storage modulus of not less than 4.5×10³ Pa and a loss tangent of not more than 0.78 at 120 °C, the air entrapment was easily eliminated. Note, however, that in the case that the maximum exposure temperature (Tₘₐₓ) was set to not more than 100 °C, results as above were also obtained for the pressure-sensitive adhesive sheet of Reference Example 1 for which the pressure-sensitive adhesive layer had a storage modulus of not less than 4.5×10³ Pa and a loss tangent of not more than 0.78 at not more than 100 °C.

Moreover, for the pressure-sensitive adhesive sheets for which the diameter of the through holes at the base material surface was not more than 40 µm, the existence of the through holes could not be seen with the naked eye.

### INDUSTRIAL APPLICABILITY

The pressure-sensitive adhesive sheet of the present invention can be favorably used in the case that air entrapment or blistering would generally be prone to occur with a pressure-sensitive adhesive sheet, for example in the case that the pressure-sensitive adhesive sheet has a large area, or the case that gas is emitted from the adherend, and in particular in the case that the pressure-sensitive adhesive sheet is exposed to high temperature after having been stuck onto the adherend.

## Claims

1. A pressure-sensitive adhesive sheet comprising a base material and a pressure-sensitive adhesive layer, having formed therein a plurality of through holes passing through from one surface to the other surface thereof, and being exposed at maximum temperature Tₘₐₓ (wherein 20 °C ≤ Tₘₐₓ ≤ 130 °C) after having been stuck onto an adherend, the pressure-sensitive adhesive sheet **characterized in that**:
said through holes have a diameter in said base material and said pressure-sensitive adhesive layer in a range of 0.1 to 300 µm, and a hole density in a range of 30 to 50,000 per 100 cm²;
and said pressure-sensitive adhesive layer has a storage modulus at Tₘₐₓ of not less than 4.5×10³ Pa, and a loss tangent at Tₘₐₓ of not more than 0.78.

2. A pressure-sensitive adhesive sheet comprising a base material and a pressure-sensitive adhesive layer, and having formed therein a plurality of through holes passing through from one surface to the other surface thereof, the pressure-sensitive adhesive sheet **characterized in that**:
said through holes have a diameter in said base material and said pressure-sensitive adhesive layer in a range of 0.1 to 300 µm, and a hole density in a range of 30 to 50,000 per 100 cm²;
and said pressure-sensitive adhesive layer has a storage modulus at 120 °C of not less than 4.5×10³ Pa, and a loss tangent at 120 °C of not more than 0.78.

3. The pressure-sensitive adhesive sheet according to claim 1 or 2, **characterized in that** said through holes are formed by laser processing.
